# EUROPÄISCHE PATENTSCHRIFT

(11) **EP 2 809 832 B1**
(45) Veröffentlichungstag und Bekanntmachung des Hinweises auf die Patenterteilung: **26.09.2018**
(21) Anmeldenummer: 13702595.3
(22) Anmeldetag: 23.01.2013
(51) Int. Cl.: C23G 1/22, C23G 1/00, C23C 22/78, C11D 11/00, C22C 21/00, C22F 1/04

(54) **ALUMINIUMLEGIERUNGSBAND MIT VERBESSERTER OBERFLÄCHENOPTIK UND VERFAHREN ZU DESSEN HERSTELLUNG**
ALUMINIUM ALLOY STRIP WITH IMPROVED SURFACE VISUAL APPEARANCE AND METHOD FOR PRODUCING THEREOF
BANDE D'ALLIAGE EN ALUMINIUM AYANT UNE SURFACE AVEC UN ASPECT VISUEL AMÉLIORÉ ET SON PROCÉDÉ DE FABRICATION

(30) Priorität: 02.02.2012 EP 12153618; 17.07.2012 EP 12176752
(43) Veröffentlichungstag der Anmeldung: 10.12.2014
(73) Patentinhaber: Hydro Aluminium Rolled Products GmbH, 41515 Grevenbroich (DE)
(72) Erfinder: BLECHER, Axel, 53859 Niederkassel (DE); SCHWARZ, Jochen, 41849 Wassenberg (DE); KERNIG, Bernhard, 50969 Köln (DE); BÖGERSHAUSEN, Dieter, 41515 Grevenbroich (DE); ECKHARD, Kathrin, 53347 Alfter (DE); GÜSSGEN, Olaf, 50931 Köln (DE)
(74) Vertreter: Cohausz & Florack
(86) Internationale Anmeldenummer: PCT/EP2013/051250
(87) Internationale Veröffentlichungsnummer: WO 2013/113598

(56) Entgegenhaltungen:
- EP-A1- 0 257 957
- WO-A1-2006/122852
- WO-A1-2007/045676
- WO-A1-2007/141300
- WO-A1-2010/108953
- WO-A2-2011/090692
- GB-A- 2 148 942
- US-A- 5 380 468
- US-A1- 2010 243 108

## Beschreibung

Die Erfindung betrifft ein Aluminiumlegierungsband oder - blech mit verbesserter Oberflächenoptik, welches durch Warm- und/oder Kaltwalzen hergestellt ist und aus einer Aluminiumlegierung vom Typ AA 5182 besteht. Daneben betrifft die Erfindung ein Verfahren zur Herstellung eines Aluminiumlegierungsbandes mit verbesserter Oberflächenoptik sowie die Verwendung eines entsprechenden Aluminiumlegierungsbandes.

Bänder, bestehend aus einer Aluminiumlegierung vom Typ AA 3xxx, AA 5xxx, AA 6xxx oder AA 8xxx werden häufig in Anwendungsgebieten eingesetzt, bei welchen die Oberflächen des Aluminiumlegierungsbandes am fertigen Produkt sichtbar bleiben. Beispielsweise werden Dosendeckel aus einer Aluminiumlegierung vom Typ AA5182 hergestellt und mit einem Klarlack oder einem gold getönten Klarlack überzogen. Die entsprechenden Dosendeckel zeigen dann die Oberflächenoptik des fertig hergestellten Aluminiumlegierungsbandes oder lassen diese durch den getönten Lack hindurch sichtbar werden. Andere Aluminiumlegierungsbänder beispielsweise bestehend aus einer AA 3xxx Aluminiumlegierung werden auch lackiert ausgeliefert. Decklackierte Bänder dieser Aluminiumlegierung werden beispielsweise zur Herstellung von Rollladen oder Dachfensterbändern eingesetzt. AA 8xxx Aluminiumlegierungen werden unter anderem für Verpackungszwecke, insbesondere Blisterverpackungen eingesetzt.

Bei der Herstellung des Aluminiumlegierungsbandes wird insbesondere bei den Walzschritten Walzöl verwendet, welches aufgrund der Walzschritte zusammen mit anderen Partikeln in die Oberfläche des Aluminiumlegierungsbandes eingearbeitet wird. Insbesondere neuere Walzöle und Walzemulsionen, welche erhöhten Umweltschutzanforderungen Rechnung tragen, erweisen sich als nachteilig für die Oberflächenoptik des hergestellten Aluminiumlegierungsbandes. Es ergaben sich mit den neuen Walzemulsionen bzw. Walzölen Probleme bei nachfolgenden Oberflächenbehandlungsschritten, insbesondere einer Oberflächenpassivierung bzw. auch Oberflächenlackierung, so dass es zu Ausschussproduktionen kommt oder die Bänder einer erneuten Reinigung unterzogen werden mussten. Nach dem Walzen können auch Wärmebehandlungen, vorzugsweise Glühungen, also beispielsweise Zwischenglühungen oder Endglühungen durchgeführt werden, um die Aluminiumlegierungsbänder in einen spezifischen Gefügezustand zu überführen. Problematisch war dabei bisher, dass es durch die Glühung insbesondere zu einer Anreicherung von Magnesiumbestandteilen in Oberflächen nahen Bereichen der Bänder kommt. Hohe Magnesiumgehalte an der Oberfläche, sei es aufgrund einer möglichen Wärmebehandlung oder durch den (warm-)Walzprozess oder generell aufgrund der Legierungszusammensetzung, führen zu einer dunkleren Oberfläche des Aluminiumlegierungsbandes, so dass auch nach einer Entfettung das Aluminiumlegierungsband eine dunkle Oberflächenoptik aufweist. Entsprechend dunkle Aluminiumlegierungsbänder konnten daher nicht auf einfache Weise zu Produkten mit hell und edel erscheinenden Oberflächen verarbeitet werden. Schwankungen beispielsweise in der Prozessführung können zusätzlich zu sichtbar unterschiedlichen Oberflächenoptiken, beispielsweise bei verschiedenen Coils der gleichen Aluminiumlegierung führen. Schwanken die Prozessparameter während der Produktion kommt es zum Teil zu einem fleckigen Aussehen des Bandes, was beispielsweise in der Produktion von mit Klarlack lackierten Produkten zu Ausschuss führt. Bisher wurden für die genannten Aluminiumlegierungsbänder übliche Entfettungen verwendet, welche zwar das Walzöl ausreichend von der Oberfläche des Aluminiumlegierungsbandes entfernte, aber insbesondere durch Anreicherung von Magnesium dunkler gewordene Oberflächen nicht beeinflussen konnten. Dieses Phänomen zeigte sich insbesondere bei den höher legierten Aluminiumlegierungsbändern vom Typ AA 3xxx, AA 5xxx, AA 6xxx und AA 8xxx. Produkte, die anschließend mit einem Klarlack oder getönten Klarlack lackiert wurden, zeigen unterschiedliche Oberflächenoptiken, da die lackierten Oberflächen entweder dunkler oder heller wirken, je nachdem, welche Oberflächenoptik die unter dem Lack vorhandene Aluminiumlegierungsschicht hatte. Dies gilt auch bei Produkten hergestellt aus den Aluminiumlegierungsbändern, die lediglich eine Oberflächenpassivierung aufweisen. Zudem musste bei der konventionellen Entfettung die Produktivität, d.h. die Verarbeitungsgeschwindigkeit an den Bandzustand d.h. beispielsweise der Walzölbelegung jeweils angepasst werden.

Hiervon ausgehend liegt der vorliegenden Erfindung die Aufgabe zugrunde, ein Aluminiumlegierungsband oder -blech vorzuschlagen, welches trotz des erhöhten Anteils an Legierungsbestandteilen eine verbesserte, insbesondere "edle" Oberflächenoptik aufweist. Daneben liegt der Erfindung die Aufgabe zugrunde, ein Verfahren zur Herstellung eines entsprechenden Aluminiumlegierungsbandes sowie vorteilhafte Verwendungen des Aluminiumlegierungsbandes vorzuschlagen. Gemäß einer ersten Lehre der vorliegenden Erfindung wird die aufgezeigte Aufgabe durch Anspruch 1 gelöst. Das fertig gewalzte Aluminiumlegierungsband vom Typ AA 5182 weist nach einer Entfettung bei einer Farbmessung der Oberfläche im CIE L*a*b*-Farbraum bei Verwendung einer Normlichtart D65 und einem Beobachtungswinkel von 10° unter Ausschluss der direkten Reflektion durch eine Messung in 45°/0°-Geometrie eine Steigerung des Luminanzwertes L* gegenüber dem walzfettigen Zustand von mehr als 5 auf.

Die Oberflächen von Aluminiumlegierungsbändern, die relativ hoch legiert sind, weisen, wie ausgeführt, eine relativ dunkle Oberfläche aufgrund von Anreicherungsphänomenen in der Oberfläche auf. Trotz der in den genannten Aluminiumlegierungen vom Typ AA 3xxx, AA 5xxx, AA 6xxx oder AA 8xxx erhöhten Anteile an Legierungsbestandteilen, insbesondere an Magnesium, Mangan oder auch Silizium weist das erfindungsgemäße Aluminiumlegierungsband vom Typ AA 5182 eine deutliche Steigerung des Luminanzwert L* im CIE L*a*b*-Farbraum nach dem Entfetten auf. Die Oberflächen der erfindungsgemäßen Aluminiumlegierungsbänder sind damit heller im Vergleich zu konventionellen Bändern aus identischen Aluminiumlegierungen. Das L*a*b*-Farbsystem beschreibt einen standardisierten Farbraum, bei welchem sich die Farben Grün und Rot auf der a*-Achse gegenüberstehen und entsprechend auf der b*-Achse die Farben Blau und Gelb. Ziel des L*a*b*-Farbraumes ist es den physiologischen Farbeindruck zu quantifizieren und in gleichen Abständen in einem Diagram darzustellen. Die L*-Achse steht auf dieser Ebene senkrecht und gibt die Helligkeit wieder, d.h. unabhängig von den gemessenen Farbwerten wird die Helligkeit der Oberfläche messbar in diesem Farbraum. Die L*-Achse ist nämlich ein Maß für die Helligkeit der Oberfläche, da die L*-Achse als Endpunkt für Schwarz L=0 und als Endpunkt für Weiß L=100 besitzt. Alle Zwischenwerte zwischen L=0 und L=100 werden als unbunte Grautöne bezeichnet. Je höher der Luminanzwert L* nun ist, desto heller wirkt die Oberfläche.

Alle in der Patentanmeldung genannten Luminanzwerte L* beziehen sich auf eine Messung mit einer Normlichtquelle, welche die Normlichtart D65 gemäß ISO 3664 emittiert. Diese weist eine spektrale Strahlungsverteilung mit einer Farbtemperatur von 6500 K auf, was etwa dem Tageslicht bei einem bedeckten Himmel entspricht. Die Luminanzwerte wurden weiterhin ermittelt für 10° Normalbeobachter in einer 45 zirk./0-Geometrie.

Bisher erreichen konventionelle Aluminiumlegierungsbänder bei einer solchen Messung Luminanzwerte von unter 40 und zeigen insbesondere zwischen dem walzfettigen Zustand und dem entfetteten Zustand nur marginale Unterschiede in der Helligkeit der Oberfläche. Um die Helligkeit der Oberfläche zu messen, wird eine 45°/0°-Messung unter einem 45° Winkel unter Ausschluss der direkten Reflektion durchgeführt. Hierbei wird die Probe beispielsweise in einem Winkel vom 45° mit der genannten Normlichtquelle bestrahlt und die gestreute Strahlung, welche senkrecht zur bestrahlten Oberfläche der Probe gestreut wird, mit einem Spektrometer gemessen. Grundsätzlich besteht auch die Möglichkeit die Probe senkrecht zu bestrahlen und das unter einem Winkel von 45° gestreute Licht zu messen. Zur Transformation in den L*a*b* CIE Farbraum wird das gestreute Licht in die Spektralfarben zerlegt, um daraus die entsprechenden Werte für den L*a*b*-Farbraum zu generieren. Die Luminanzwerte L* sind dabei Geräte unabhängig und geben ein exaktes Maß für die Helligkeit der Oberfläche, wie sie einem Betrachter erscheint, an.

Die erfindungsgemäßen Aluminiumlegierungsbandoberflächen zeigen eine deutlich hellere Oberfläche im entfetteten Zustand als konventionelle Legierungsbänder. Beim erfindungsgemäßen Aluminiumlegierungsband ergibt sich nämlich eine Steigerung der Luminanzwerte L* um mehr als 5, bevorzugt mehr als 6 und besonders bevorzugt mehr als 10 beim Vergleich des walzfettigen und des entfetteten Bandes. Übliche Steigerungen zwischen walzfettig und entfettet lagen bisher bei L*-Werten von 1,5. Die Steigerung der Luminanzwerte L* um mehr als 5 ist deutlich sichtbar, so dass erfindungsgemäße Aluminiumlegierungsbänder eine deutlich edlere und heller wirkende Oberflächenoptik aufweisen. Sie lassen sich auf einfache Weise, nämlich ohne besondere Oberflächenbehandlung, für hoch dekorative Oberflächen einsetzen und weiterverarbeiten.

Das erfindungsgemäße Aluminiumlegierungsband aus einer Aluminiumlegierung vom Typ AA 5182 erreicht einen Luminanzwert L* von mehr als 40. Das Aluminiumlegierungsband zeichnet sich insofern durch eine besonders helle Oberfläche aus, was an der deutlichen Steigerung der Luminanzwerte L* vom walzfettigen zum entfetteten Zustand herrührt. Aluminiumlegierungsbänder aus AA 5182 konnten bisher nicht mit diesen Luminanzwerten, d.h. mit dieser edlen und hellen Oberflächenoptik hergestellt werden. Werden die Aluminiumlegierungsbänder aus einer Aluminiumlegierung vom Typ 5182 mit Klarlack oder einem getönten Klarlack lackiert, kann ein Luminanzwert L* nach der Lackierung von mindestens 52, vorzugsweise mindestens 55 gemessen werden. Die Steigerung der Luminanzwerte L* nach der Lackierung verglichen mit dem walzfettigen Zustand ist bei dem erfindungsgemäßen Aluminiumlegierungsband besonders hoch. Die Steigerung der Luminanzwerte L* betrug mehr als 15.

Gemäß einer nächsten Ausgestaltung des erfindungsgemäßen Aluminiumlegierungsbandes kann das Aluminiumlegierungsband zwischen- und/oder endgeglüht werden. Beide Wärmebehandlungen können zu einer deutlichen Anreicherung von Mg-Atomen im Oberflächenbereich der Bänder führen, so dass diese dunkler werden. Aluminiumlegierungen mit einem hohen Gehalt an Mg zeigt generell durch den Walzprozess eine dunkle Oberflächenanmutung. Das erfindungsgemäße Aluminiumlegierungsband weist aber auch bei hohen Mg-Gehalten an der Oberfläche eine Steigerung des Luminanzwertes L* von mehr als 5, bevorzugt 6 oder besonders bevorzugt mehr als 10 auf, da die angereicherten Oberflächenbereiche dem Beizangriff ausgesetzt sind.

Das erfindungsgemäße Aluminiumlegierungsband ist selbst dann vorteilhaft, wenn das Aluminiumlegierungsband lackiert oder decklackiert ist, da der Lack auf der helleren, d.h. sauberen Oberfläche besser haftet. Darüber hinaus ist es auch vorteilhaft, wenn das Aluminiumlegierungsband Oberflächen passiviert ist, um nachfolgende Prozessschritte, beispielsweise das Lackieren zu erleichtern. Die Passivierung kann beispielsweise durch eine Chromatierung oder eine chromfreie Passivierung auf Zr- und/oder Ti-Basis erfolgen. Als Auftragsverfahren wird vorzugsweise ein "No-Rinse"-Verfahren oder ein Tauchverfahren verwendet.

Da das erfindungsgemäße Aluminiumlegierungsband häufig als Verpackungsmaterial, als Oberflächenteil oder als Strukturteil verwendet wird, ist es vorteilhaft, wenn das Aluminiumlegierungsband eine Dicke von 0,05 mm bis 0,9 mm aufweist. Die sehr geringen Dicken von 0,05 mm werden beispielsweise bei der Bereitstellung von Blisterverpackungen aus einem entsprechenden Aluminiumlegierungsband verwendet. Die größeren Banddicken von etwa 0,9 mm treten dagegen in Anwendungen wie beispielsweise einem Dachfensterband auf. Mittlere Banddicken von 0,2 bis 0,5 mm werden vorzugsweise für Dosendeckel bzw. das Deckelband verwendet. Das Gleiche gilt auch für die Lasche der Dose.

Gemäß einer zweiten Lehre der vorliegenden Erfindung wird die aufgezeigte Aufgabe durch ein Verfahren zur Herstellung eines Aluminiumlegierungsbandes mit verbesserter Oberflächenoptik, bei welchem das Aluminiumlegierungsband aus einer Aluminiumlegierung vom Typ AA 5182, AA 6xxx oder AA 8xxx hergestellt wird und zumindest einem Kaltwalzen unter Verwendung eines Walzöls unterzogen wurde, dadurch gelöst, dass das kaltgewalzte Aluminiumlegierungsband nach dem Kaltwalzen einer Entfettung unter Verwendung einer alkalischen Beize unterzogen wird und anschließend eine saure Spülung des Aluminiumlegierungsbandes erfolgt und die alkalische Beize folgende Bestandteile umfasst: mindestens 1,5-3 Gew.-% eines Gemisches aus 5-40 Gew.-% Natriumtripolyphosphat, 3-10 Gew.-% Natriumgluconat, 3-8 Gew.-% nichtionischer und anionischer Tenside, optional 0,5-70 Gew.-% Natriumcarbonat, bevorzugt 30-70 Gew.-% Natriumcarbonat, wobei Natronlauge der wässrigen Lösung zugegeben ist, so dass die Natronlaugenkonzentration 0,2-2,5 Gew.-% beträgt.

Die alkalische Beize hat die Eigenschaften, nicht nur das Walzöl zu entfernen, sondern gleichzeitig über einen Beizangriff auf der Oberfläche des Aluminiumlegierungsbandes einen spezifischen Beizabtrag durchzuführen. Zudem werden durch den Beizangriff Oberflächen nahe Schichten mit hohen Mg-Gehalten abgetragen, so dass die darunter liegenden Schichten zu Tage treten. Aber auch eingewalzte Magnesiumoxidpartikel werden entfernt, welche die Optik ebenfalls stören können. Hierbei ist vorzugsweise die Alkalikonzentration so zu wählen, dass der Beizangriff gleichmäßig erfolgt und die Beizrate an denn angestrebten Grad an der Helligkeit der Oberfläche des Aluminiumlegierungsbandes eingestellt wird. Die anschließende saure Spülung entfernt die abgebeizten Partikel und Oberflächenreste vom Aluminiumlegierungsband, so dass eine Flächenbelegung durch abgebeizte Partikel verhindert wird. Bei der sauren Spülung werden üblicherweise Mineralsäuren verwendet. Grundsätzlich können aber auch andere Säuren zum Einsatz kommen. Im Ergebnis bleibt eine hellere bzw. edlere Oberfläche des Aluminiumlegierungsbandes zurück. Die Oberfläche verändert sich nicht über die Länge des Aluminiumlegierungsbandes, da keine weiteren Walzschritte und Beeinträchtigungen der Oberfläche erfolgen. Überraschenderweise zeigte sich insbesondere, dass die Verwendung dieser alkalischen Beize vor allem bei höher legierten Aluminiumlegierungsbändern, beispielsweise eine Aluminiumlegierung vom Typ AA 5182, zu einer deutlichen Verbesserung der Oberflächenoptik bzw. zu einem deutlichen Aufhellen der Oberfläche führt. Die brillantere Oberflächenoptik des erfindungsgemäß hergestellten Aluminiumlegierungsbandes führt gleichzeitig zu einer deutlichen Vereinheitlichung der gesamten Oberfläche des Aluminiumlegierungsbandes, so dass höhere Luminanzwerte über die gesamte Bandlänge erreicht werden. Die Steigerung der Luminanzwerte L* lag, wie bereits ausgeführt, bei mehr als 5, bevorzugt bei mehr als 6 bzw. 10.

Besonders gute und prozesssicher erreichbare Ergebnisse in Bezug auf die verbesserte Oberflächenoptik wurde gemäß des erfindungsgemäßen Verfahrens dadurch erreicht, dass die alkalische Beize folgende Bestandteile umfasst: mindestens 1,5 bis 3 Gew.-% eines Gemisches aus 5 bis 40 Gew.-% Natriumtripolyphosphat, 3 bis 10 Gew.-% Natriumgluconat, 3 bis 8 Gew.-% nichtionischer und anionischer Tenside, optional 0,5 bis 70 Gew.-% Natriumkarbonat, bevorzugt 30 bis 70 Gew.-% Natriumkarbonat, wobei Natronlauge der wässrigen Lösung zugegeben ist, so dass die Natronlaugenkonzentration 0,2 bis 2,5 Gew.-% beträgt. Es hat sich gezeigt, dass bei der Verwendung dieser alkalischen Beize eine hervorragende Entfettung und gleichzeitig ein ausreichend großer Beizangriff auf die Oberfläche des Aluminiumlegierungsbandes erreicht werden kann, so dass im Ergebnis ein mit einer verbesserten Oberflächenoptik ausgestattetes Aluminiumlegierungsband bereitgestellt werden kann. Bevorzugt wird eine Natronlaugenkonzentration von 0,2 bis 1,5 Gew.-% verwendet. Hierdurch wird ein kontrollierter Beizangriff erreicht.

Darüber hinaus hat sich gezeigt, dass vorzugsweise die Verweildauer des Aluminiumlegierungsbandes im Entfettungsmedium 1 bis 8 s, bevorzugt 2 bis 6 s beträgt. Diese Verweildauer ermöglicht, wie bereits ausgeführt, eine ausreichende Entfettung und Beizung der Oberfläche des Aluminiumlegierungsbandes bei gleichzeitiger Ermöglichung eines hoch automatisierten Prozesses mit ausreichender Produktionsgeschwindigkeit.

Die Verweildauer des Aluminiumlegierungsbandes im Entfettungsmedium kann dadurch herabgesenkt werden, dass das Entfettungsmedium eine Temperatur von 60 bis 80°C, bevorzugt 65 °C bis 75 °C aufweist. Die erhöhte Temperatur führt zu einer höheren Reaktivität des Entfettungsmediums und damit zu einem intensiveren Beizangriff.

Darüber hinaus konnten gute Ergebnisse in Bezug auf die Bereitstellung einer helleren Oberfläche des Aluminiumlegierungsbandes dadurch erreicht werden, dass das entfettete Aluminiumlegierungsband unter Verwendung einer Salpetersäure oder einer Schwefelsäure sauer gespülte wurde. Beide Säuren erzielen bei der Spülung eine ausreichende Entfernung der Oberflächenbelegung des Aluminiumlegierungsbandes, so dass im Ergebnis prozesssicher eine sehr saubere, helle Oberfläche des Aluminiumlegierungsbandes bereitgestellt werden kann. Die Konzentration der Salpetersäure beträgt vorzugsweise 1 bis 4 Gew.-% und die der Schwefelsäure vorzugsweise 1 bis 3 Gew.-%. Die genannten Säurekonzentrationen ermöglichen eine gute Reinigung der alkalisch gebeizten Bänder bei hoher Prozessgeschwindigkeit.

Gemäß einer weiteren Ausgestaltung des erfindungsgemäßen Verfahrens erfolgt nach dem Entfetten und Spülen eine Oberflächenpassivierung, beispielsweise durch eine Chromatierung oder eine chromfreie Passivierung auf Basis von Zr und/oder Ti. Andere Passivierung sind selbstverständlich auch denkbar. Bevorzugt wird dabei zum Auftragen der Oberflächenpassivierung ein No-Rinse-Verfahren angewendet. Die Oberflächenpassivierung vereinfacht nachfolgende Prozessschritte, beispielsweise die Lackierung der Oberfläche und sorgt zudem für einen ausreichenden Schutz gegenüber zusätzlichen Einflüssen auf die Oberflächenqualität. Es zeigte sich zusätzlich, dass die Prozesssicherheit beim Passivieren erfindungsgemäß entfetteter Aluminiumlegierungsbändern deutlich höher ist. Bevorzugt erfolgt die Oberflächenpassivierung "inline" mit dem Entfettungs- und Spülungsprozess. Die "inline" Oberflächenpassivierung findet demnach unmittelbar nach der Spülung des entfetteten Bandes in der gleichen Anlage statt, ohne das Band vor der Oberflächenpassivierung aufzuwickeln. Hierdurch kann der Oberflächenzustand des Aluminiumlegierungsbandes auf optimale Weise konserviert werden.

Vorzugsweise wird das Aluminiumlegierungsband mit oder ohne oberflächenpassivierter Oberfläche nach der Entfettung lackiert. Beispielsweise kann ein getönter Klarlack, ein Klarlack oder auch ein Decklack eingesetzt werden, um eine entsprechende Optik bereitzustellen. Auch die Lackierung kann "inline" mit der Entfettung und Spülung sowie optional mit der Passivierung erfolgen. Das Aluminiumlegierungsband kann aber auch erst passiviert und anschließend zu einem lagerfähigen Coil aufgewickelt werden, so dass es später einer Lackierung zugeführt werden kann. Alle mit einem Klarlack oder getönten Klarlack lackierten Oberflächen zeigen aufgrund der optimierten Entfettung eine Steigerung der Luminanzwerte L* im fertigen Aluminiumlegierungsband. Decklackierungen können, wie auch die Lackierung mit Klarlack mit höherer Prozesssicherheit "inline" durchgeführt werden, da der Entfettungszustand des erfindungsgemäßen Aluminiumlegierungsbandes einheitlich ist.

Schließlich wird die einleitend dargelegte Aufgabe durch die Verwendung des erfindungsgemäßen Aluminiumlegierungsbandes zur Herstellung von Verpackungen, Dosen, Dosendeckel, Blisterverpackungen, Dachfenster, Rollladenstäbe und Paneele, Verbundwerkstoffe, Ventiltellerdeckeln und Container verwendet. Den genannten Anwendungen des erfindungsgemäßen Aluminiumlegierungsbandes ist gemein, dass es sich um Oberflächen sensitive Produkte handelt, da Oberflächenfehler oder Schwankungen in der Oberflächenqualität unmittelbar zu Ausschussproduktion führen. Bei sichtbaren Aluminiumoberflächen ist die edlere und einheitlichere Oberfläche vorteilhaft. Die lackierten Produkte profitieren gleichzeitig von dem prozesssicheren und schnelleren Entfetten des Aluminiumlegierungsbandes und der hohen Prozesssicherheit bei der nachfolgenden Lackierung.

Im Weiteren soll die Erfindung anhand von Ausführungsbeispielen in Verbindung mit der Zeichnung näher erläutert werden. Die Zeichnung zeigt in
- Fig. 1: eine schematische Darstellung des L*a*b*-CIE-Farbraums,
- Fig. 2: eine schematische Darstellung der Messanordnung zur Bestimmung der Luminanzwerte L* und
- Fig. 3.: in einer schematischen Darstellung eine Vorrichtung zur Entfettung eines erfindungsgemäßen Aluminiumlegierungsbandes.

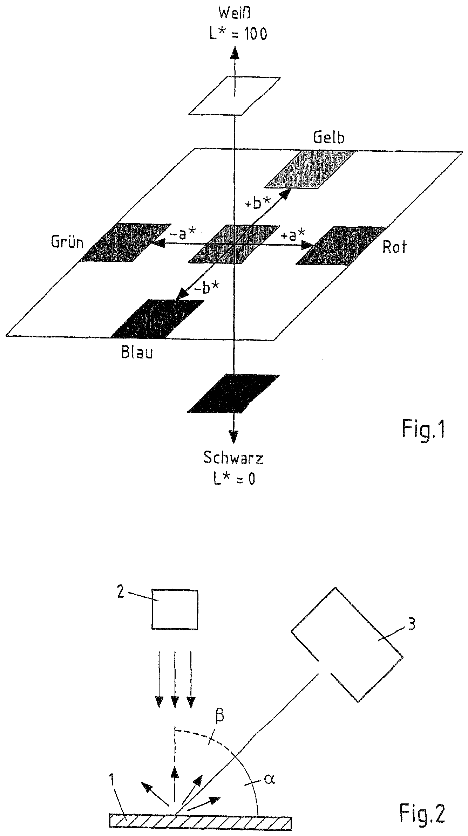

In Fig. 1 ist zunächst eine Darstellung des CIE L*a*b*-Farbraums in einem Diagramm dargestellt. Der CIE L*a*b*-Farbraum, welchem das gleichnamige Farbmodell zugrunde liegt, ist geräteunabhängig und in der deutschen Norm DIN 6174 mit dem Titel "Farbmetrische Bestimmung von Farbmaßzahlen und Farbabständen im angenähert gleichförmigen CIE L*a*b*-Farbraum" festgelegt. Die Koordinaten des L*a*b*-Farbortes orientieren sich an den physiologischen Eigenschaften der menschlichen Wahrnehmung, insbesondere der Farbwahrnehmung und basieren mittelbar auf physikalischen Farbvalenzen. Wie in Fig. 1 ersichtlich, wird der L*a*b*-Farbraum durch ein dreidimensionales Koordinatensystem beschrieben, bei welchem die a*-Achse den Rot- bzw. Grünanteil einer Farbe beschreibt und die b*-Achse den Blau- bzw. Gelbanteil. Die Skalenwerte der a*-Achse und der b*-Achse umfassen einen Zahlenbereich von ca. -100 bis ca. +100. Die L*-Achse beschreibt die Helligkeit, die Luminanz, der Farbe mit Werten von 0 bis 100. Dabei steht für 0 die Farbe Schwarz und für 100 die Farbe Weiß. Dadurch, dass der L*a*b*-Farbraum geräteunabhängig ist, besteht die Möglichkeit über die Luminanzwerte die Helligkeit der Oberfläche des Aluminiumlegierungsbandes geräteunabhängig zu bestimmen.

Hierzu ist die in Fig. 2 schematisch dargestellte Versuchsanordnung verwendet worden. Die in Fig. 2 dargestellte Aluminiumlegierungsbandprobe 1 wird über eine Normlichtquelle 2 beleuchtet. Wie bereits zuvor erwähnt, wurde bei den Messungen der Luminanzwerte L* die Normlichtart D65 gemäß ISO 3664 unter einem Beobachtungswinkel von 10° verwendet. Das in einem Winkel β von der Probe emittierte Streulicht der Normlichtquelle 2 wird mit einem Spektrometer 3 aufgefangen und vermessen. Der Winkel β beträgt 45°, so dass insbesondere für den Helligkeitseindruck verantwortliche Oberflächeneffekte, welche die Luminanzwerte L* beeinflussen, gemessen werden können. Wie die Anordnung aus Fig. 2 zeigt, wird dabei das direkt reflektierte Licht vom Spektrometer 3 nicht erfasst, sondern nur das von der Oberfläche gestreute Licht. Das Spektrometer 3 zerlegt dann die gemessene Lichtverteilung in die einzelnen Farbwerte und generiert die L*a*b*-Farbraumwerte. Hierzu ist das Spektrometer 3 selbstverständlich auf die Normlichtquelle 2 kalibriert worden, um den Einfluss der spektralen Verteilung des von der Normlichtquelle 2 emittierten Lichts auf die Farbraummessung zu berücksichtigen. Wie bereits ausgeführt, sind die gemessenen Werte Geräte unabhängig und stehen daher objektiv für das Erscheinungsbild der Oberfläche des Aluminiumlegierungsbandes.

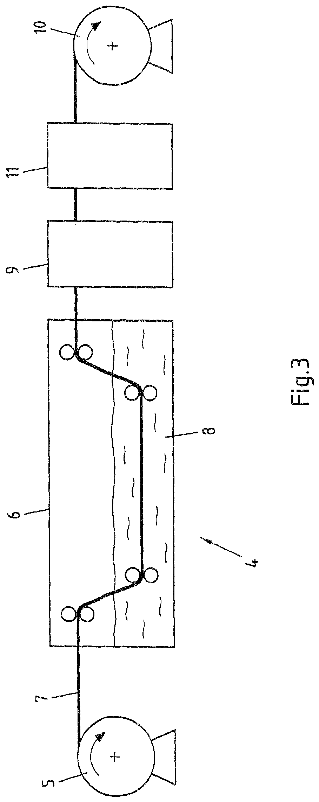

Die vermessenen Proben entstammen aus Aluminiumlegierungsbändern, welche beispielsweise mit einer in Fig. 3 schematisch dargestellten Entfettungsvorrichtung 4, entfettet wurden. Zur Entfettung wird ein Coil auf einer Abwickelhaspel 5 abgewickelt. Das abgewickelte Aluminiumlegierungsband 7 durchläuft dann ein Tauchbad 6, in welchem das Aluminiumlegierungsband 7 durch das Entfettungsmedium 8 geführt wird. Alternativ zum Tauchbad 6 kann eine nicht dargestellte Sprühvorrichtung vorgesehen sein, welche das Entfettungsmedium auf die Bandoberfläche sprüht. Anschließend durchläuft das Aluminiumlegierungsband 7 noch ein Spülvorrichtung 9, um über eine saure Spülung, bei welcher, wie bereits ausgeführt, beispielsweise Salpetersäure mit 2,5 Gew.-% oder Schwefelsäure mit 2 Gew.-% Konzentration in wässriger Lösung verwendet wird, die Flächenbelegung und Reste vom Entfettungsmedium vom Aluminiumlegierungsband zu entfernen. Der pH-Wert der sauren Spülung betrug vorzugsweise weniger als 3. Danach wird das Aluminiumlegierungsband 7 vorzugsweise einer Oberflächenpassivierung 11 zugeführt. Die Oberfläche des Aluminiumlegierungsbandes 7 wurde bei den Ausführungsbeispielen im No-Rinse-Verfahren chromatiert bzw. passiviert. Die Passivierung ermöglicht beispielsweise, dass der Zustand der Bandoberfläche, d.h. die verbesserte Oberflächenoptik, für weitere Prozesse, beispielsweise einem Lackieren, konserviert werden kann. Nach einer Trocknung des Aluminiumlegierungsbandes 7 in einer nicht dargestellten Trocknungsvorrichtung kann es dann auf der Aufwickelhaspel 10 aufgewickelt werden, von welchem die vermessenen Proben entnommen wurden.

Bei den durchgeführten Versuchen betrug die Temperatur des Entfettungsmediums 70°C und die Verweildauer des Aluminiumlegierungsbandes im Entfettungsmedium betrug etwa 2 s bis 6 s. Mit gleichen Parametern wurde zunächst ein Aluminiumlegierungsband vom Typ AA 5182 einer konventionellen Entfettung unterzogen und anschließend eine Farbmessung der Oberfläche durchgeführt. Gleiches erfolgte dann unter Verwendung der alkalischen Beize und zwar im Versuch 1 unter Zugabe von 0,25 Gew.-% Natronlauge, im Versuch 2 unter Zugabe von 0,5 Gew.-% Natronlauge, im Versuch 3 unter Zugabe von 0,75 Gew.-% Natronlauge sowie im Versuch 4 unter Zugabe von 1 Gew.-% Natronlauge bei Bebehaltung von Temperatur und Dauer der Entfettung.

Darüber hinaus wurden die Proben walzfettig, entfettet, mit Klarlack oder mit einem getönten Klarlack, hier als "Goldlack" bezeichnet, lackiert vermessen. Die Ergebnisse sind in Tabelle 1 dargestellt.

Wie man deutlich der Tabelle 1 entnehmen kann, wird bei der konventionellen Entfettung der Luminanzwert zwischen walzfettig und entfettet kaum gesteigert. Die Steigerung des Luminanzwertes L* bei konventioneller Entfettung lag unterhalb von 1,39, also unter 2. Die Auftragung einer Klarlackschicht bzw. einer getönten Klarlackschicht auf die konventionell entfettete Aluminiumlegierungsoberfläche erzeugte eine Erhöhung des Luminanzwertes L* um Werte unterhalb von 14.

**Tabelle 1**

| **Versuch** | | **L*** | **a*** | **b*** | **Δ L*** |
|---|---|---|---|---|---|
| **Konventionell** | walzfettig | 37,3 | 0,32 | -1,71 | |
| | entfettet | 38,69 | 0,11 | -2,29 | 1,39 |
| | Klarlack | 51,27 | -0,15 | 0,62 | 13,97 |
| | Goldlack | 49,7 | 0,37 | -1,77 | 12,41 |
| | | | | | |
| **Versuch 1** | walzfettig | 36,16 | 0,45 | -1,69 | |
| **0,25 Gew.-% NaOH** | entfettet | 41,28 | 0,06 | -3,98 | 5,12 |
| **Erfindung** | Klarlack | 53,65 | -0,04 | -3,12 | 17,49 |
| | Goldlack | 56,16 | -1,03 | 2,97 | 20 |
| | | | | | |
| **Versuch 2** | walzfettig | 36,92 | 0,51 | -1,7 | |
| **0,5 Gew.-% NaOH** | entfettet | 43,19 | -0,12 | -4,14 | 6,28 |
| **Erfindung** | Klarlack | 55,2 | -0,35 | -3,46 | 18,29 |
| | Goldlack | 57,07 | -1,17 | 2,55 | 20,15 |
| | | | | | |
| **Versuch 3** | walzfettig | 37,13 | 0,38 | -1,73 | |
| **0,75 Gew.-% NaOH** | entfettet | 48,75 | -0,74 | -4,43 | 11,62 |
| **Erfindung** | Klarlack | 57,69 | -0,59 | -3,77 | 20,56 |
| | Goldlack | 58,44 | -1,42 | 2,49 | 21,31 |
| | | | | | |
| **Versuch 4** | walzfettig | 37,53 | 0,25 | -1,67 | |
| **1 Gew.-% NaOH** | Entfettet | 47,8 | -0,44 | -4,21 | 10,27 |
| **Erfindung** | Klarlack | 58,14 | -0,69 | -4,09 | 20,61 |
| | Goldlack | 58,33 | -1,78 | 2,02 | 20,81 |

Anders dagegen zeigte sich in den Versuchen 1 bis 4 eine deutliche Steigerung der Luminanzwerte L* bereits im entfetteten Zustand um Werte von mehr als 5. Mit zunehmender Abbeizrate, d.h. mit zunehmender Natronlaugenkonzentration zeigte sich etwa bis 0,75 Gew.-% Natronlauge eine Steigerung der Luminanzwerte L* im entfetteten Zustand um mehr als 10 im Vergleich zur walzfettigen Variante. Dies sind beträchtliche und deutlich sichtbare Steigerung. Die Aluminiumlegierungsbandoberfläche hat ein deutlich helleres Erscheinungsbild, kann besser passiviert und lackiert werden. Die Steigerung der Luminanzwerte L* bei Verwendung eines Klarlacks bzw. eines getönten Klarlacks lagen dann deutlich über 17 und im Spitzenwert bis über 20. Es zeigte sich insbesondere, dass die Steigerung der Luminanzwerte L* im Vergleich zu konventionell entfetteten und lackierten Varianten identisch mit den Steigerungen im unlackierten Zustand sind. Die verbesserte bzw. hellere Oberfläche wirkt sich also auch auf lackierte Varianten auf.

Die erfindungsgemäßen Aluminiumlegierungsbänder zeigen deutlich eine verbesserte Oberflächenoptik mit einem deutlich helleren Oberflächeneindruck als konventionelle Aluminiumlegierungsbänder bestehend aus der gleichen Aluminiumlegierung. Dieser kann durch Messung im CIE L*a*b*-Farbraum nachgewiesen werden.

Die Besonderheit der Oberfläche liegt allerdings nicht nur in der verbesserten Optik, sondern auch in der verbesserten Prozessierbarkeit. Es konnte auch festgestellt, dass die Passivierung und/oder Lackierung entsprechend hergestellter, optisch heller Aluminiumlegierungsoberflächen deutlich prozesssicherer verläuft und nahezu unabhängig von der Qualität des Vorbandes und insbesondere dessen Grad an Verschmutzung mit Walzöl und der durchgeführten Wärmebehandlung ist.

## Patentansprüche

1. Aluminiumlegierungsband oder -blech, welches durch Warm- und/oder Kaltwalzen hergestellt ist und aus einer Aluminiumlegierung vom Typ AA 5182 besteht,
**dadurch gekennzeichnet, dass**
das fertig gewalzte Aluminiumlegierungsband nach einer Entfettung bei einer Farbmessung der Oberfläche im CIE L*a*b*-Farbraum unter Ausschluss der direkten Reflektion in 45°/0°-Geometrie bei Verwendung einer Normlichtart D65 und einem Beobachtungswinkel von 10° eine Steigerung des Luminanzwertes L* (ΔL) gegenüber dem walzfettigen Zustand von mehr als 5 aufweist und bei einer Farbmessung der Oberfläche im CIE L*a*b*-Farbraum unter Ausschluss der direkten Reflektion in 45°/0°-Geometrie bei Verwendung einer Normlichtart D65 und einem Beobachtungswinkel von 10° einen Luminanzwert L* von mehr als 40 erreicht erhalten durch Entfettung mit einer alkalischen Beize und anschließender sauren Spülung des Aluminiumlegierungsbandes.

2. Aluminiumlegierungsband oder -blech nach Anspruch 1,
**dadurch gekennzeichnet, dass**
das Aluminiumlegierungsband zwischen- und/oder endgeglüht ist.

3. Aluminiumlegierungsband oder -blech nach einem der Ansprüche 1 bis 2,
**dadurch gekennzeichnet, dass**
das Aluminiumlegierungsband eine Dicke von 0,05 mm bis 0,9 mm aufweist.

4. Aluminiumlegierungsband oder -blech nach einem der Ansprüche 1 bis 3,
**dadurch gekennzeichnet, dass**
das entfettete Aluminiumlegierungsband Oberflächen passiviert und/oder lackiert ist.

5. Verfahren zur Herstellung eines Aluminiumlegierungsbandes mit verbesserter Oberflächenoptik, insbesondere eines Aluminiumlegierungsbandes nach einem der Ansprüche 1 bis 4, bei welchem das Aluminiumlegierungsband aus einer Aluminiumlegierung vom Typ AA 5182, AA 6xxx oder AA 8xxx hergestellt wird und zumindest einem Kaltwalzen unter Verwendung eines Walzöls unterzogen wurde,
**dadurch gekennzeichnet, dass**
das fertig gewalzte Aluminiumlegierungsband einer Entfettung unter Verwendung einer alkalischen Beize unterzogen wird und anschließend eine saure Spülung des Aluminiumlegierungsbandes erfolgt und die alkalische Beize folgende Bestandteile umfasst:
mindestens 1,5 - 3 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside, optional 0,5 - 70 Gew.-% Natriumcarbonat, bevorzugt 30 - 70 Gew.-% Natriumcarbonat, wobei Natronlauge der wässrigen Lösung zugegeben ist, so dass die Natronlaugenkonzentration 0,2 - 2,5 Gew.-% beträgt.

6. Verfahren nach Anspruch 5,
**dadurch gekennzeichnet, dass**
das Aluminiumlegierungsband während oder nach dem Walzen einer Zwischen- oder Endglühung unterzogen wird.

7. Verfahren nach einem der Ansprüche 5 oder 6,
**dadurch gekennzeichnet, dass**
die Verweildauer des Aluminiumlegierungsbandes im Entfettungsmedium 1 bis 8 s, bevorzugt 2 bis 6 s beträgt.

8. Verfahren nach einem der Ansprüche 5 bis 7,
**dadurch gekennzeichnet, dass**
die Temperatur des Entfettungsmediums 65 °C bis 75 °C beträgt.

9. Verfahren nach einem der Ansprüche 5 bis 8,
**dadurch gekennzeichnet, dass**
die saure Spülung unter Verwendung einer Salpetersäure oder einer Schwefelsäure erfolgt.

10. Verfahren nach einem der Ansprüche 5 bis 9,
**dadurch gekennzeichnet, dass**
nach dem Entfetten und Spülen eine Oberflächenpassivierung erfolgt.

11. Verfahren nach einem der Ansprüche 5 bis 10,
**dadurch gekennzeichnet, dass**
das Aluminiumlegierungsband nach der Entfettung lackiert wird.

12. Verwendung eines Aluminiumlegierungsbandes nach einem der Ansprüche 1 bis 4,
**dadurch gekennzeichnet, dass**
das Aluminiumlegierungsband zur Herstellung von Verpackungen, Dosen, Dosendeckel, Blisterverpackungen, Dachfenster, Rollladenstäbe und Paneele, Verbundwerkstoffe, Ventiltellerdeckeln und Containern verwendet wird.

## Claims

1. An aluminum alloy strip or sheet, which is fabricated via hot and/or cold rolling, and consists of a type AA 5182 aluminum alloy,
**characterized in that**,
after degreasing, the finished-rolled aluminum alloy strip exhibits an increase in the luminance value L* (ΔL) in relation to the rolled-greasy state of more than 5 while measuring the color of the surface in the CIE L*a*b* color space using a standard illuminant D65 and an observation angle of 10°, excluding direct reflection in 45°/0° geometry, and reaches a luminance value L* of greater than 40 while measuring the color of the surface in the CIE L*a*b* color space using a standard illuminant D65 and an observation angle of 10°, excluding direct reflection in 45°/0° geometry, achieved by degreasing with an alkaline pickle and a subsequent acid rinse of the aluminum alloy strip.

2. The aluminum alloy strip or sheet according to claim 1,
**characterized in that**
the aluminum alloy strip is intermediately and/or finally annealed.

3. The aluminum alloy strip or sheet according to one of claims 1 to 2,
**characterized in that**
the aluminum alloy strip exhibits a thickness of 0.05 mm to 0.9 mm.

4. The aluminum alloy strip or sheet according to one of claims 1 to 3,
**characterized in that**
the degreased aluminum alloy strip is surface passivated and/or varnished.

5. A method for manufacturing an aluminum alloy strip with an improved surface optics, in particular an aluminum alloy strip according to one of claims 1 to 4, in which the aluminum alloy strip is fabricated out of a type AA 5182, AA 6xxx or AA 8xxx aluminum alloy, and exposed at least to cold rolling with the use of a rolling oil,
**characterized in that**
the finished-rolled aluminum alloy strip is subjected to degreasing with the use of an alkaline pickle, after which the aluminum alloy strip goes through an acid rinse and the alkaline pickle encompasses the following constituents: at least 1.5 to 3 wt% of a mixture of 5 to 40 wt% sodium tripolyphosphate, 3 to 10 wt% sodium gluconate, 3 to 8 wt% nonionic and anionic surfactant, optionally 0.5 to 70 wt% sodium carbonate, preferably 30 to 70 wt% sodium carbonate, wherein caustic soda lye is added to the aqueous solution, so that the caustic soda lye concentration measures 0.2 to 2.5 wt%.

6. The method according to claim 5,
**characterized in that**
the aluminum alloy strip is subjected to intermediate or final annealing during or after rolling.

7. The method according to claim 5 or 6,
**characterized in that**
the retention time of the aluminum alloy strip in the degreasing medium measures 1 to 8 s, preferably 2 to 6 s.

8. The method according to one of claims 5 to 7,
**characterized in that**
the temperature of the degreasing medium measures 65°C to 75°C.

9. The method according to one of claims 5 to 8,
**characterized in that**
the acid rinse takes place using a nitric acid or sulfuric acid.

10. The method according to one of claims 5 to 9,
**characterized in that**
degreasing and rinsing are followed by surface passivation.

11. The method according to one of claims 5 to 10, **characterized in that**
the aluminum alloy strip is varnished after degreasing.

12. Use of an aluminum alloy strip according to one of claims 1 to 4,
**characterized in that**
the aluminum alloy strip is used to manufacture packaging, cans, can lids, blister packaging, skylights, shutter wands and panels, composites, valve disk lids and containers.

## Revendications

1. Feuillard ou tôle en alliage d'aluminium qui est fabriqué par laminage à chaud et/ou à froid et qui est composé d'un alliage d'aluminium de type AA 5182, **caractérisé en ce que** le feuillard en alliage d'aluminium laminé fini présente, après dégraissage, lors d'une mesure de couleur de la surface dans l'espace colorimétrique CIE L*a*b* en utilisant une lumière normalisée de type D65 et un angle d'observation de 10° excluant la réflexion directe dans la géométrie 45°/0°, une augmentation de la valeur de luminance L* (ΔL) supérieure à 5 par rapport à l'état laminé gras et atteint, lors d'une mesure de couleur de la surface dans l'espace colorimétrique CIE L*a*b* en utilisant une lumière normalisée de type D65 et un angle d'observation de 10° excluant la réflexion directe dans la géométrie, une valeur de luminance L* supérieure à 40 obtenue par un dégraissage avec un décapant alcalin et ensuite par un rinçage acide du feuillard en alliage d'aluminium.

2. Feuillard ou tôle en alliage d'aluminium selon la revendication 1, **caractérisé en ce que** le feuillard en alliage d'aluminium est soumis à un recuit intermédiaire ou final.

3. Feuillard ou tôle en alliage d'aluminium selon l'une des revendications 1 à 2, **caractérisé en ce que** le feuillard en alliage d'aluminium présente une épaisseur allant de 0,05 mm à 0,9 mm.

4. Feuillard ou tôle en alliage d'aluminium selon l'une des revendications 1 à 3, **caractérisé en ce que** le feuillard en alliage d'aluminium est passivé et/ou laqué à la surface.

5. Procédé de fabrication d'un feuillard en alliage d'aluminium à aspect de surface amélioré, en particulier un feuillard en alliage d'aluminium selon l'une des revendications 1 à 4, lors duquel le feuillard en alliage d'aluminium est composé d'un alliage en aluminium du type AA 5182, AA 6xxx ou AA 8xxx et a été au moins soumis à un laminage à froid en utilisant une huile de laminage, **caractérisé en ce que** le feuillard en alliage d'aluminium laminé fini est soumis à un dégraissage en utilisant un décapant alcalin et ensuite un rinçage acide du feuillard en alliage d'aluminium a lieu et le décapant alcalin comprend les constituants suivants : au moins 1,5 - 3 % en poids d'un mélange se composant de 5 - 40 % en poids de tripolyphosphate de sodium, 3 - 10 % en poids de gluconate de sodium, de 3 - 8 % en poids d'agents tensioactifs non ioniques et anioniques, au choix 0,5 - 70 % en poids de carbonate de sodium, de préférence 30 - 70 % de carbonate de sodium, où de la soude caustique est incorporée à la solution aqueuse de sorte à obtenir une concentration de soude caustique de 0,2 - 2,5 % en poids.

6. Procédé selon la revendication 5, **caractérisé en ce que** le feuillard en alliage d'aluminium est soumis, pendant ou après le laminage, à un recuit intermédiaire ou final.

7. Procédé selon la revendication 5 ou 6, **caractérisé en ce que** la durée de séjour du feuillard en alliage d'aluminium dans l'agent dégraissant est de 1 à 8 s, de préférence de 2 à 6 s.

8. Procédé selon l'une des revendications 5 à 7, **caractérisé en ce que** la température de l'agent dégraissant se situe entre 65 °C à 75 °C.

9. Procédé selon l'une des revendications 5 à 8, **caractérisé en ce que** le rinçage acide a lieu en utilisant un acide nitrique ou un acide sulfurique.

10. Procédé selon l'une des revendications 5 à 9, **caractérisé en ce qu'**une passivation de surface a lieu après le dégraissage et le rinçage.

11. Procédé selon l'une des revendications 5 à 10, **caractérisé en ce que** le feuillard en alliage d'aluminium est laqué après le dégraissage.

12. Utilisation d'un feuillard en alliage d'aluminium selon l'une des revendications 1 à 4, **caractérisée en ce que** le feuillard en alliage d'aluminium est utilisé pour fabriquer des emballages, des boîtes, des couvercles de boîte, des emballages coque, des fenêtres de toit, des lattes de volet roulant et des panneaux, des matériaux composites, des couvercles disque de soupape et des conteneurs.
